# EUROPÄISCHE PATENTSCHRIFT

(11) **EP 2 666 232 B1**
(45) Veröffentlichungstag und Bekanntmachung des Hinweises auf die Patenterteilung: **15.03.2017**
(21) Anmeldenummer: 12704667.0
(22) Anmeldetag: 20.01.2012
(51) Int. Cl.: H02K 11/25, H01H 37/76, H01H 37/04

(54) **SCHUTZVORRICHTUNG, INSBESONDERE FÜR DIE STEUERELEKTRONIK EINER KRAFTFAHRZEUGKOMPONENTE**
PROTECTIVE DEVICE, IN PARTICULAR FOR THE CONTROL ELECTRONICS OF A MOTOR VEHICLE COMPONENT
DISPOSITIF DE PROTECTION DESTINÉ EN PARTICULIER À L'ÉLECTRONIQUE DE COMMANDE D'UN COMPOSANT D'UN VÉHICULE AUTOMOBILE

(30) Priorität: 21.01.2011 DE 202011001820 U
(43) Veröffentlichungstag der Anmeldung: 27.11.2013
(73) Patentinhaber: Brose Fahrzeugteile GmbH & Co. Kommanditgesellschaft, Würzburg, 97076 Würzburg (DE)
(72) Erfinder: WINHEIM, Georg, 97737 Gemünden (DE)
(74) Vertreter: FDST Patentanwälte
(86) Internationale Anmeldenummer: PCT/EP2012/000258
(87) Internationale Veröffentlichungsnummer: WO 2012/098005

(56) Entgegenhaltungen:
- EP-A1- 1 355 406
- DE-A1- 19 829 920
- DE-A1-102006 060 624
- DE-A1-102007 011 548
- DE-A1-102007 014 338
- DE-B4-102007 025 345
- FR-A1- 2 894 384

## Beschreibung

Die Erfindung betrifft eine Steuerelektronik eines Kühlerlüfterantriebs eines Kraftfahrzeugs gemäß dem Oberbegriff des Anspruchs 1. Eine derartige Steuerelektronik ist aus der DE 10 2007 025 345 B4 bekannt. Unter Kühlerlüfter wird hierbei eine Kraftfahrzeugkomponente mit einem elektronisch gesteuerten Gleichstrommotor zur Kühlwasserkühlung des Kraftfahrzeugs verstanden.

Aus der DE 10 2007 011 548 A1 ist ein elektromotorisch betriebenes Verstellsystem eines Kraftfahrzeugs, wie beispielsweise ein Fensterheber, eine Sitzverstellung oder ein Tür- oder Schiebedachantrieb, mit einer Ansteuerelektronik zur Steuerung des Elektromotors bekannt. Zusätzlich zu einem Software-Thermoschutz ist ein thermisches Sicherungselement in Form eines Federelementes als Überlastschutz in einen zum Elektromotor führenden Leiterbahnabschnitt zwischen zwei Lotpunkten gehalten. Bei einem über eine bestimmte Zeit fließenden Überlaststrom wird das Lot an einem der Lotpunkte aufgeschmolzen, so dass in Folge der Federvorspannung des Federelementes die Leiterbahn spontan unterbrochen wird. Diese Thermosicherung kann als ein vorgespanntes spiralfederartiges Federelement, als Blattfeder oder als Querschnittsverengung nach Art einer Dehndrahtsicherung ausgeführt sein.

Aus der DE 10 2007 025 345 B4 ist es bekannt, in einem Gleichstrom-Lüftermotor eines Kraftfahrzeuges ein Thermoschutzelement in Form eines TCO-Elementes (thermal cut-off-element), einer Schmelzsicherung oder eines Bimetallschalters in Verbindung mit einem kunststoffumspritzten Stanzgitter einzusetzen, das zwischen einem Gleichspannungsversorgungsanschluss und einer Steuerelektronik angeordnet und an diese thermisch gekoppelt ist. Übersteigt die Temperatur der Steuerelektronik einen vorgegebenen Schwellwert, so löst das Thermoschutzelement aus und unterbricht die elektrische Verbindung zwischen dem Gleichspannungsversorgungsanschluss und der Steuerelektronik.

Unter einem TCO-Element (thermal cut-off-element) wird hierbei ein federvorgespanntes und mittels eines Lotes verbundenes Kontaktpaar verstanden, deren Kontakte beim Schmelzen des Lotes in Folge der Federrückstellkraft öffnen und den Stromkreis unterbrechen. Eine Schmelzsicherung ist üblicherweise durch einen zwei elektrische Kontakte verbindenden Schmelzleiter realisiert, der sich in Folge des über ihn fließenden Stroms erwärmt und bei deutlicher Überschreitung des Bemessungsstroms schmilzt.

Die bekannten Thermoschutzelemente sind einerseits für elektronisch gesteuerte Elektromotoren und andererseits für eine nur geringe Stromtragfähigkeit sowie einen relativ kleinen Temperaturarbeitsbereich bis ca. 80°C konzipiert.

Der Erfindung liegt die Aufgabe zugrunde, eine Steuerelektronik einer derartigen Kraftfahrzeugkomponente mit einer besonders zuverlässigen Schutzvorrichtung anzugeben, die zur Übernahme einer dortigen Schutzfunktion besonders geeignet ist.

Diese Aufgabe wird erfindungsgemäß gelöst durch die Merkmale der Ansprüche 1. Vorteilhafte Ausgestaltungen, Weiterbildungen und Varianten sind Gegenstand der Unteransprüche.

Das Thermoschutzelement weist zwei im Bereich einer Unterbrechungsstelle mit einem Schmelzmittel gebrückte Leiterabschnitte auf. Die Leiterabschnitte weisen einander unter Bildung der Unterbrechungsstelle zugewandte Leiterenden und jeweils ein Anschlussende auf, wobei diese Anschlussenden die beiden Kontaktenden des Thermoschutzelementes bilden.

Das die beiden Leiterenden der Leiterabschnitte umschließende Schmelzmittel übergreift zumindest eines der Leiterenden in Leiterlängsrichtung über einen zur Breite der Unterbrechungsstelle in eine bestimmte Relation gesetzten Leiterabschnitt, der kürzer ist als die Breite der Unterbrechungsstelle. Besonders geeignet ist ein Überdeckungsbereich bzw. Umschließungsabschnitt des jeweiligen Leiterabschnitts, der 10% der sich über die beiden Leiterabschnitte inklusive der Unterbrechungsstelle erstreckenden Gesamtlänge des Thermoschutzelementes beträgt. Als besonders zweckmäßig hat sich eine Gesamtlänge des Thermoschutzelementes von 30mm bei einer Breite der Unterbrechungsstelle von 5mm herausgestellt, so der jeweilige Umschließungsabschnitt vorzugsweise beidseitig der Unterbrechungsstelle an den Leiterenden 3mm beträgt. Diese Abmessungen sind bei etwa kreisrunden Querschnitten der Leiterabschnitte und der Schmelzstelle geeigneterweise kombiniert mit einem Durchmesser des Schmelzmittels, der dem 2-fachen bis 2,5-fachen, vorzugsweise dem 2,2-fachen, des Durchmessers des Leiterabschnitts beträgt.

Eines der Anschluss- bzw. Kontaktenden des Thermoschutzelementes ist mit einem Kontakt eines Anschlussstanzgitters eines beispielsweise von der Bordnetzbatterie des Kraftfahrzeugs zu der Elektronik und dort zu einer dieser zugeordneten Leiterplatte (Platine) führenden Leitungs- oder Kabelsatzes verbunden, während dann das andere Anschlussenden mit einem Kontakte der Steuerelektronik bzw. der Leiterplatte verbunden ist. Das Anschlussstanzgitter ist zur Herstellung eines isolierenden Leitungs- oder Kabelanschlussgehäuses mit einem geeigneten Material umspritzt.

Die Schmelztemperatur des Schmelzmittels ist an einen von der Wahl des Materials und den Abmessungen sowie ggf. auch der Geometrie des Schmelzmittels abhängigen Temperaturschwellwert angepasst und beträgt bevorzugt zwischen 170°C bis 260°C. Der Temperaturschwellwert ist seinerseits bestimmt durch einen unzulässig hohen Temperaturanstieg in der jeweiligen Elektronik. Steigt die Temperatur der oder in der Elektronik auf Werte oberhalb des Temperaturschwellwert und somit oberhalb der Schmelztemperatur des Schmelzmittels an, so schmilzt dieses und unterbricht die Strom-/Spannungsversorgung der Elektronik.

Das Schmelzmittel ist geeigneterweise ein Lot aus einer dem Temperaturschwellwert angepassten Metalllegierung, insbesondere mit Bestandteilen aus Blei, Zinn, Silber und/oder Kupfer. Die Bau- oder Querschnittsform des Thermoschutzelementes kann rund oder vieleckig sein. Wird die Schmelzmittelbrücke des Thermoschutzelementes in ein Gehäuse eingebaut, so kann die Schmelze - also das geschmolzene Schmelzmittel oder Lot - von einem Füllmaterial aufgesaugt werden. Dieses kann als Zusatzfunktion auch zum Verlöschen eines eventuellen Lichtbogens dienen.

Der Kontakt des Anschlussstanzgitters ist ein Schneidklemmkontakt zur Klemmkontaktierung des zugeordneten Anschlussendes des Thermoschutzelementes. Auch ist der Kontakt der Steuerelektronik ein auf der Leiterplatte beispielsweise in SMD-Technik montierter Schneidklemmkontakt zur Klemmkontaktierung des zugeordneten Anschlussendes des Thermoschutzelementes.

Um eine möglichst hohe Stromtragfähigkeit zu realisieren, wie dies beispielsweise auch in der bevorzugten Anwendung bei einem Kühlerlüfterantrieb erforderlich ist, sind die Schneidklemmkontakte als Kontaktpaare ausgebildet. Hierzu sind jeweils zwei Schneidklemmkontakte in einem Abstand zueinander angeordnet und elektrisch leitend miteinander verbunden, wobei deren Schneidklemmschlitze miteinander fluchten.

Die mit der Erfindung erzielten Vorteile bestehen insbesondere darin, dass mittels des vorzugsweise mit Lot gebrückten Thermoschutzelementes eine praktisch beliebige Außengeometrie (rund, eckig, gerade oder gebogen) bei gleichzeitig einfachem Aufbau realisiert werden kann. Zudem enthält das Thermoschutzelement keine beweglichen Teile, so dass insbesondere auch kein mechanischer Stress, beispielsweise durch eine Vorspannkraft, vorhanden ist. Die Unterbrechung des Stromflusses erfolgt somit gerade nicht durch bewegliche mechanische Komponenten und ein galvanisches Zusammenwachsen der geöffneten Schmelzmittelbrücke führt erneut zu einem Abschmelzen des Schmelzmittels. Somit ist die Langzeitsicherheit auch nach dem ersten Auslösen gegeben.

Des Weiteren ist die Auslösetemperatur des Thermoschutzelementes durch die Auswahl des Schmelzmittels vorgebbar. Ferner ist die Krafteinwirkung auf die Leiterplatte (Platine) der Elektronik bei der Leitungs- oder Kabelsatzmontage reduziert. Bei Ausführungsvarianten ohne Thermoschutz ist zudem das Einpressen eines Kupferlackdrahtes anstelle des Thermoschutzelementes in die Schneidklemmkontakte möglich.

Nachfolgend werden Ausführungsbeispiele der Erfindung anhand einer Zeichnung näher erläutert. Darin zeigen:
- Fig. 1: ausschnittsweise in perspektivischer Darstellung ein in Schneidklemmkontakten fixiertes Thermoschutzelement,
- Fig. 2: in einer Stirnansicht auf einen Schneidklemmkontakt die Kontaktierung des Thermoschutzelementes,
- Fig. 3: in einer Seitenansicht das in Schneidklemmkontaktpaaren fixierte Thermoschutzelement mit unterhalb einer Leiterplatte angeordnetem, umspritztem Anschlussstanzgitter (Leitungsoder Kabelsatzstanzgitter) mit auf die Platinenoberseite geführtem Schneidklemmkontaktpaare,
- Fig. 4: in einer Draufsicht die Schneidklemmkontaktierung des Thermoschutzelementes zwischen dem leiterplattenseitigen Schneidklemmkontakt und dem kabelsatz- bzw. leitungsseitigen Schneidklemmkontakt,
- Fig. 5: die Darstellung gemäß Fig. 4 mit umspritztem Anschlussstanzgitter,
- Fig. 6a und 6b: das Thermoschutzelement im Querschnitt bzw. im Längsschnitt entlang der Linie Vlb-Vlb in Fig. 6a,
- Fig. 7: in perspektivischer Darstellung einen Kühlerlüfterantrieb für ein Kraftfahrzeug mit integrierter Umrichterelektronik mit Blick auf eine Anschlussseite des Motors, und
- Fig. 8: in Draufsicht den Motor gemäß Fig. 7 bei abgenommenem Elektronikfachdeckel (Gehäusedeckel).

Einander entsprechende Teile sind in allen Figuren mit den gleichen Bezugszeichen versehen.

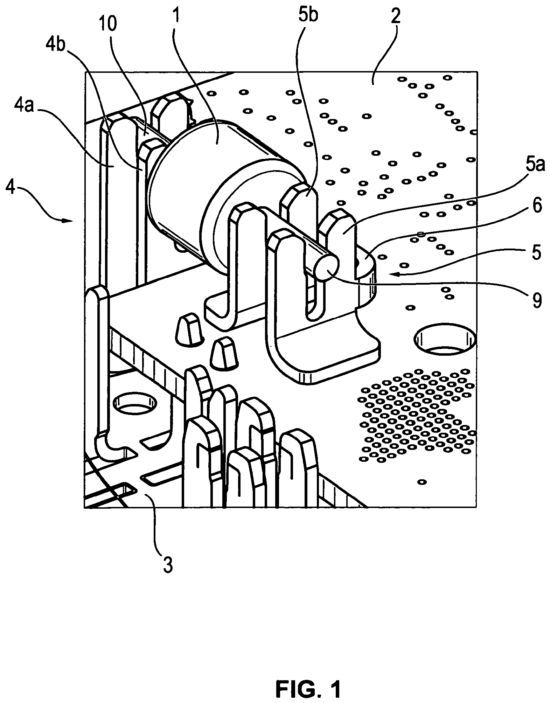

Die Fig. 1 bis 5 zeigen ein Thermoschutzelement 1 einer vorliegend von einer Leiterplatte 2 repräsentierten Steuerelektronik einer Kraftfahrzeugkomponente. Hierbei handelt es sich in nicht näher dargestellter Weise insbesondere um einen Kühlerlüfterantrieb mit einem elektronisch gesteuerten Gleichstrommotor. An bzw. in die Elektronik ist ein nur ausschnittsweise sichtbares Stanzgitter 3 eines Leitungs- oder Kabelsatzes (Kabelsatzstanzgitter) geführt, das unterschiedliche, empor ragende Anschlusskontakte aufweist. Einer dieser Anschlusskontakte des Anschlussstanzgitters 3 ist als Schneidklemmkontaktpaar 4 mit zwei zueinander beabstandeten und miteinander fluchtenden Schneidklemmkontakten 4a und 4b ausgeführt. Hierbei kann es sich um die Klemme 30 oder 31 handeln.

Ein weiteres Schneidklemmkontaktpaar 5 mit ebenfalls zwei zueinander beabstandeten Schneidklemmkontakten 5a und 5b ist auf der Leiterplatte 2 beispielsweise in SMD-Technik (surface mounted device) montiert und dort bedarfsmäßig mit einer Leiterbahn elektrisch kontaktiert.

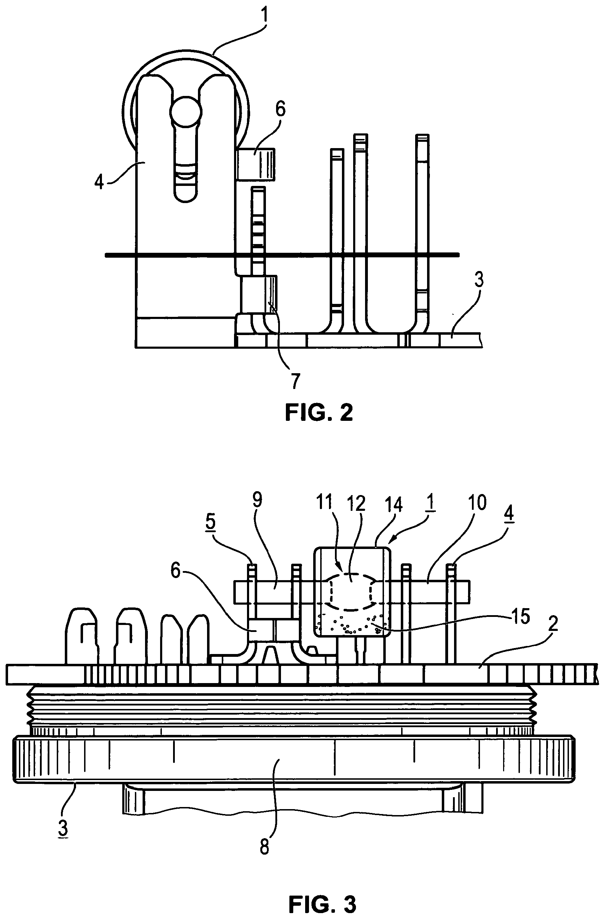

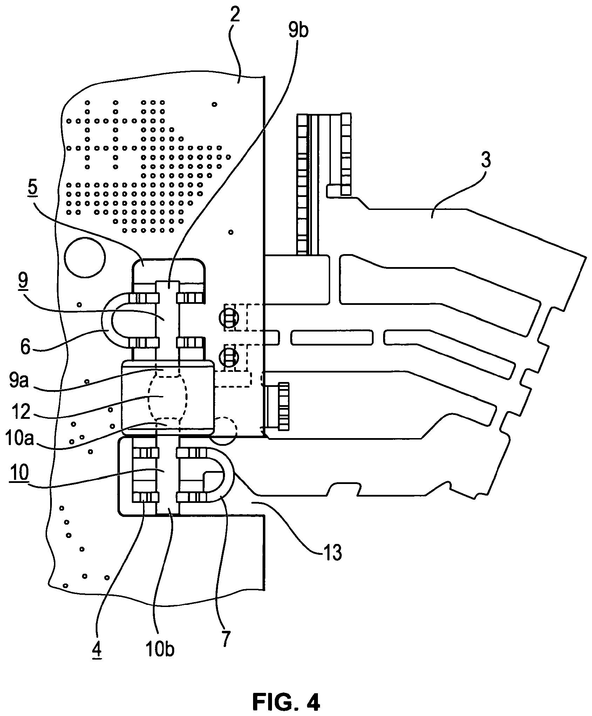

Wie an dem Schneidklemmkontaktpaar 5 in Fig. 1 erkennbar ist, sind die beiden Schneidklemmkontakte 5a und 5b über einen Kontaktbügel 6 stoffschlüssig und elektrisch leitend miteinander verbunden. Analog sind auch die Schneidklemmkontakte 4a und 4b des kabelseitigen Schneidklemmkontaktpaares 4 mittels eines Kontaktbügel 7 stoffschlüssig und elektrisch leitend miteinander verbunden, wie dies aus den Fig. 2 und 4 vergleichsweise deutlich ersichtlich ist. Die Kontakt- oder Verbindungsbügel 6, 7 der Schneidklemmkontaktpaare 5 bzw. 4 sind im Stanzbiegeverfahren aus einem entsprechenden, geeigneten Kontaktblech hergestellt.

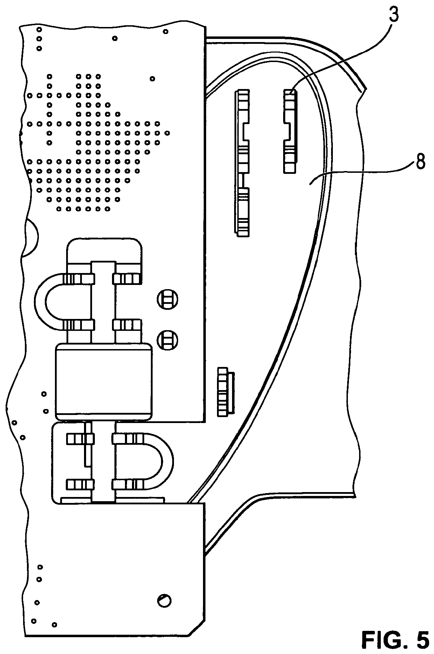

Wie aus den Fig. 3 und 5 ersichtlich ist, ist das Anschluss- bzw. Kabelsatzstanzgitter zur Herstellung eines isolierenden Leitungs- oder Kabelanschlussgehäuses 8 mit einem geeigneten Material umspritzt.

Das Thermoschutzelement 1 besteht aus einem ersten Leiterabschnitt 9 und einem zweiten Leiterabschnitt 10, die unter Bildung einer Unterbrechungsstelle 11 zueinander beabstandet sind. Die Unterbrechungsstelle 11 ist mit einem Schmelzmittel 12 in Form eines Lotes, beispielsweise eines Bleilotes, gebrückt. Hierzu stehen sich die Leiterenden 9a und 10a der Leiterabschnitte 9 bzw. 10 beabstandet gegenüber und sind über das Lot 12 elektrisch leitend miteinander verbunden.

Die den Leiterenden 9a, 10a der Leiterabschnitte 9, 10 gegenüberliegenden Anschlussenden 9b bzw. 10b sind in den Schneidklemmkontakten 5 bzw. 4 fixiert und somit einerseits mit dem Anschlussstanzgitter 3 und andererseits mit einer mit dem Schneidklemmkontaktpaar 5 kontaktierten Leiterbahn der Leiterplatte 2 elektrisch leitend verbunden. Das Thermoschutzelement 1 ist, wie aus den Fig. 1, 4 und 5 vergleichsweise deutlich ersichtlich ist, im Wesentlichen auf der Leiterplatte 2 montiert. Hierzu weist die Leiterplatte 2 einen Ausschnitt 13 auf, in den das Schneidklemmkontaktpaar 4 des Anschlussstanzgitters 3 eingeführt ist.

Das Thermoschutzelement 1 ist somit einer in der Elektronik und somit im Bereich der Leiterplatte 2 entstehenden Wärmeentwicklung ausgesetzt. Da sich die Leiterplatte 2 und somit die Elektronik üblicherweise in einem Antriebsgehäuse, beispielsweise eines Kühlerlüfterantriebs befindet, führt die Wärmeentwicklung der Elektronik, beispielsweise in Folge von eindringender Feuchtigkeit und dadurch bedingter unerwünschter Stromflüsse, unter Umständen zu einem Temperaturanstieg. Steigt die Temperatur über einen bestimmten Temperaturschwellwert an so schmilzt das Lot 12 auf, wodurch die elektrisch leitende Verbindung zwischen den Leiterabschnitten 9 und 10 im Bereich der Unterbrechungsstelle 11 unterbrochen wird. Die Schmelztemperatur des Lotes 12 ist dabei auf den Temperaturschwellwert eingestellt. Dies erfolgt im Wesentlichen durch die Geometrie und die Abmessungen, d.h. der Größe des Lotes 12 und dessen Material, das seinerseits durch eine entsprechend gewählte Metalllegierung aus Komponenten wie Blei, Zinn, Silber und/oder Kupfer zusammengesetzt ist. Die Schmelztemperatur beträgt typisch 170° bis 260°C, beispielsweise etwa 180°C.

Das Thermoschutzelement 1 weist zudem ein Gehäuse 14 auf, das im Ausführungsbeispiel zylinderförmig ist. Das Gehäuse 14 umschließt die Unterbrechungsstelle 11 mit dem Lot 12 und zumindest teilweise die Leiterabschnitte 9 und 10 im Bereich deren Leiterenden 9a bzw. 10a. Innerhalb des Gehäuses 14 ist ein Füllmaterial 15 vorhanden, das im Fall des Aufschmelzens des Lotes 12 dieses aufsaugt. Das Füllmaterial 15 kann zudem dazu vorgesehen und ausgelegt sein, um einen Lichtbogen zu verlöschen. Das Gehäuse 14 stellt zudem sicher, dass das aufschmelzende Lot innerhalb des Thermoschutzelementes 1 eingekapselt verbleibt.

Die Leiterabschnitte 9, 10 sind beispielsweise aus Kupferdrähten gebildet, deren Drahtquerschnitte an die geforderte Stromtragfähigkeit des Thermoschutzelementes 1 angepasst ist. Die Querschnittsfläche der Leiterabschnitte 9, 10 ist praktisch beliebig und kann rund oder eckig sein. Auch können die Leiterabschnitte 9, 10 - wie im Ausführungsbeispiel gezeigt gerade - oder aber auch gebogen sein.

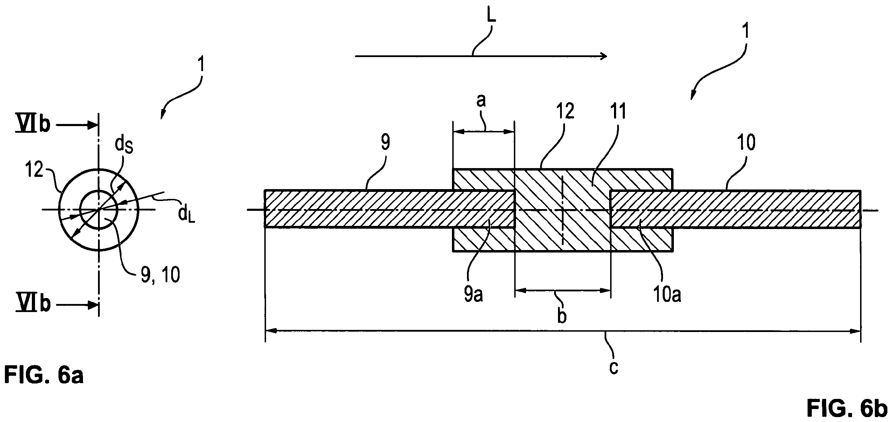

Die Fig. 6a und 6b zeigen das Thermoschutzelement 1 im Querschnitt bzw. im Längsschnitt. Erkennbar umschließt das Schmelzmittel 12 das Leiterende 9a und das Leiterende 10a in Leiterlängsrichtung L über einen Leiterabschnitt a, der kürzer ist als die Breite b der Unterbrechungsstelle 11. Der Leiterabschnitt a beträgt zehn Prozent (10%) der sich über die beiden Leiterabschnitt 9, 10 inklusive der Unterbrechungsstelle 11 erstreckenden Gesamtlänge c beträgt, wobei vorzugsweise c = 30mm, b = 5mm und somit a = 3mm ist. Der Durchmesser d_{S} des vorzugsweise aus Zinn (Sn) bestehenden oder Zinn enthaltenden Schmelzmittels 12 beträgt vorzugsweise 4mm bei einem Durchmesser d_{L} des oder jedes vorzugsweise aus Kupfer (Cu) bestehenden Leiterabschnitts 9, 10 von 1,8mm.

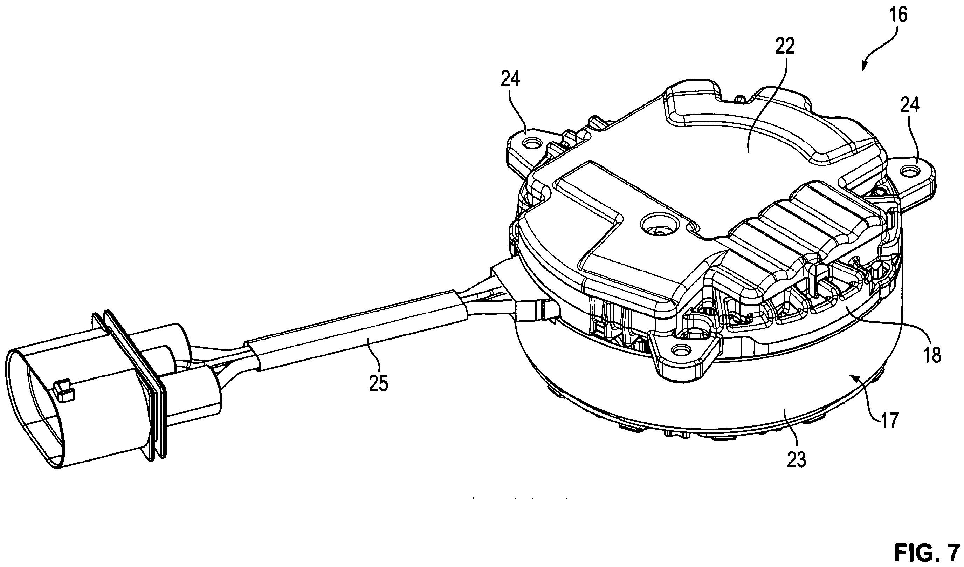

Fig. 7 zeigt den Elektromotor 16 eines Lüfters für den Kühler eines Kraftfahrzeugs. Der Motor 16 wird im Wesentlichen gebildet durch einen Stator 17 der mit einer dreiphasigen Drehfeldwicklung in Form von Spulen bewickelt ist. Der Motor 16 umfasst des Weiteren einen permanent erregten (nicht sichtbaren) Rotor, der im Inneren des Stators 17 um eine Motorachse drehbar gelagert ist. Der Motor 16 umfasst femer einen etwa scheibenförmigen Motorträger 18, in den ein Elektronikfach 20 eingebracht, in das eine Umrichterelektronik 21 eingesetzt ist. Zur dichten Verschließung des Elektronikfachs 20 umfasst der Motor 16 einen nachfolgend auch als Gehäusedeckel bezeichneten Elektronikfachdeckel 22.

Der Stator 17 besteht aus einem Blechpaket, das mit einem Kunststoffmantel 23 umspritzt ist. Der Motorträger 18 ist insbesondere durch ein einstückiges Druckgussteil aus Aluminium gebildet. Bei dem Elektronikfachdeckel 22 handelt es sich vorzugsweise um ein Spritzgussteil aus Kunststoff. Die Befestigung des Motors 16 und damit des gesamten Lüfters am Fahrzeug erfolgt über den Motorträger 18, der hierfür mit drei von seinem Außenumfang abstehenden Schraublaschen 24 versehen ist. Bei dem Motor 16 handelt es sich um einen bürstenlosen eigen gekühlten Innenrotor- bzw. Innenläufermotor.

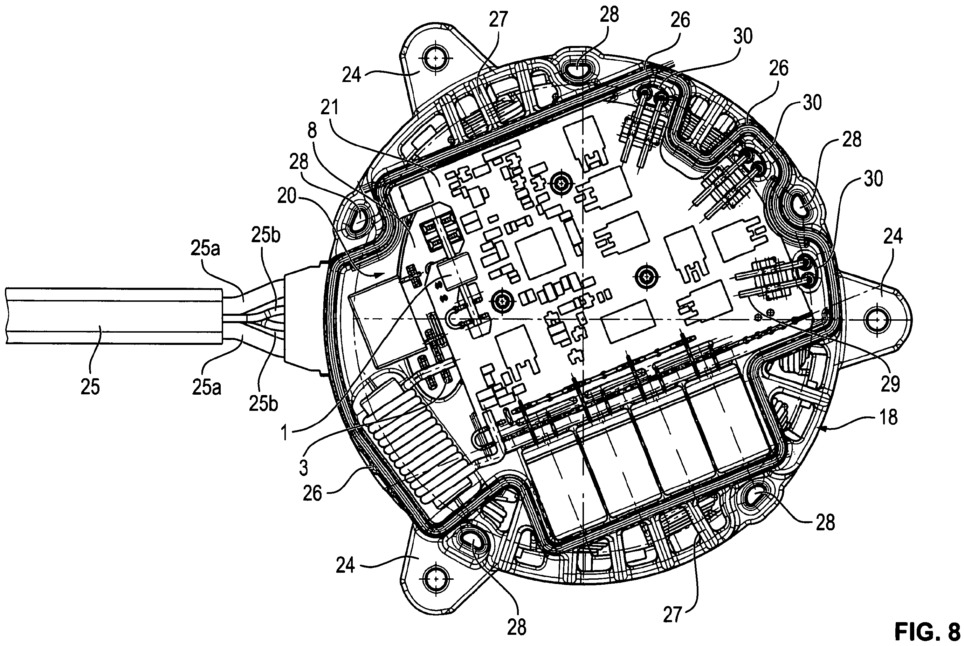

Fig. 8 zeigt den Motor 16 bei abgenommenem Elektronikfachdeckel 22 mit Blick in das Elektronikfach 20 mit darin angeordneter Umrichterelektronik 21. An diese geführt und mit dieser kontaktiert sind Versorgungsleitungen (Plus- und Minus- oder Masse-Pol) 25a sowie Sensor- oder Datenleitungen 25b eines Anschlusskabels 25. Das Elektronikfach 20 ist von einem umlaufenden, geschlossenen Dicht- oder Fügerand 26 umschlossen. Außerhalb des Elektronikfaches 20 weist der Motorträger 18 im Wesentlichen radial verlaufende Klemmrippen 27 für den Elektronikfachdeckel 22 auf. An mehreren, am Umfang des Motorträgers 18 verteilten Positionen befinden sich Fixier- oder Stemmöffnungen 28. Wicklungsendenpaare 29 einer Drehfeldwicklung des Stators 18 des Motors 16 sind über Dichtelemente 30 in korrespondierenden Durchtrittsöffnungen des Motorträgers 18 dichtend in das Elektronikfach 20 geführt.

Insbesondere aus Fig. 8 in Verbindung mit den Fig. 3 und 5 ist das umspritzte Anschluss- bzw. Kabelsatzstanzgitter 3, an dem insbesondere die Versorgungsleitungen 25a des Anschlusskabels 25 kontaktiert bzw. steckkontaktiert sind, mit dem isolierenden Leitungs- bzw. Kabelanschlussgehäuse 8 vergleichsweise deutlich erkennbar.

Obwohl das Thermoschutzelement 1 vorzugsweise als Schutzvorrichtung für die Steuerelektronik einer Kraftfahrzeugkomponente dient, ist die Erfindung nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Beispielsweise eignet sich das Thermoschutzelement 1 zum Einbau zwischen wiederum einem Stanzgitter und einer Bürstenkarte oder zwischen eine Drossel und eine Bürstenliste des Elektromotors oder zum Einbau in eine Platine bzw. Leiterplatte mittels Selektivlötung. Insbesondere sind ferner alle im Zusammenhang mit den verschiedenen Ausführungsbeispielen beschriebenen Einzelmerkmale auch auf andere Weise miteinander kombinierbar, ohne den Gegenstand der Erfindung zu verlassen.

**Bezugszeichenliste**

| | | | |
|---|---|---|---|
| 1 | Thermoschutzelement | 24 | Schraublasche |
| 2 | Leiterplatte | 25 | Anschlusskabel |
| 3 | Anschlussstanzgitter | 25a | Versorgungsleitung (Plus-/Minus-Pol) |
| 4 | stanzgitterseitiges Schneidklemmkontaktpaar | 25b | Sensor-/Datenleitung |
| 5 | leiterplattenseitiges Schneid-klemmkontaktpaar | 26 | Fügerand |
| 6 | Kontaktbügel | 27 | Klemmrippe |
| 7 | Kontaktbügel | 28 | Stemmnoppe |
| 8 | Anschlussgehäuse | 29 | Wicklungsendenpaar |
| 9 | Leiterabschnitt | 30 | Dichtelement |
| 9a | Leiterende | | |
| 9b | Anschlussende | a | Leiterabschnitt |
| 10 | Leiterabschnitt | b | Breite von 11 |
| 10a | Leiterende | c | Gesamtlänge von 1 |
| 10b | Anschlussende | ds | Durchmesser von 12 |
| 11 | Unterbrechungsstelle | d_{L} | Durchmesser von 9, 10 |
| 12 | Schmelzmittel/Lot | L | Leiterlängsrichtung |
| 13 | Ausnehmung | | |
| 14 | Gehäuse | | |
| 15 | Füllmaterial | | |
| 16 | Lüfter-/Motor | | |
| 17 | Stator | | |
| 18 | Motorträger | | |
| 20 | Elektronikfach | | |
| 21 | Umrichterelektronik | | |
| 22 | Elektronikfachdeckel | | |
| 23 | Kunststoffmantel | | |
| 21 | Anschlusskabel | | |
| 22 | Dichtrand | | |
| 23 | Klemmrippe | | |

## Patentansprüche

1. Steuerelektronik eines Kühlerlüfterantriebs eines Kraftfahrzeugs, mit einer Leiterplatte (2) und mit einem im Bereich zwischen der Leiterplatte (2) und einem Anschlussstanzgitter (3) angeordneten Thermoschutzelement (1), das bei einem Temperaturanstieg über einen Temperaturschwellwert auslöst,
- wobei eines der Anschlussenden (9b) des Thermoschutzelementes (1) mit der Leiterplatte (2) und das andere Anschlussende (10b) mit einem zur Herstellung eines isolierenden Leitungs- oder Kabelanschlussgehäuses (8) umspritzten Anschlussstanzgitter (3) eines zur Leiterplatte (2) führenden Leitungssatzes oder Anschlusskabels (25) verbunden ist,
- wobei das Thermoschutzelement (1) zwei Leiterabschnitte (9, 10) mit einander unter Bildung einer Unterbrechungsstelle (11) zugewandten Leiterenden (9a, 10a) umfasst und die Unterbrechungsstelle (11) mit einem Schmelzmittel (12) gebrückt ist, dessen Schmelztemperatur an den Temperaturschwellwert angepasst ist,
**dadurch gekennzeichnet,**
- **dass** das Thermoschutzelement (1) im Wesntlichen auf der Leiterplatte (2) montiert ist,
- **dass** der Kontakt der Leiterplatte (2) ein auf dieser montierter Schneidklemmkontakt (5) zur Klemmkontaktierung des zugeordneten Anschlussendes (9b) des Thermoschutzelementes (1) ist,
- **dass** der Kontakt des Anschlussstanzgitters (3) ein Schneidklemmkontakt (4) zur Klemmkontaktierung des zugeordneten Anschlussendes (10b) des Thermoschutzelementes (1) ist, und
- **dass** die Leiterplatte (2) einen Ausschnitt (13) aufweist, in den der Schneidklemmkontakt (4) des Anschlussstanzgitters (3) eingefügt ist.

2. Steuerelektronik nach Anspruch 1,
**dadurch gekennzeichnet,**
**dass** der Schneidklemmkontakt (4, 5) als Kontaktpaar zueinander beabstandeter und elektrisch leitend miteinander verbundener Schneidklemmkontakte (4a, 4b; 5a, 5b) ausgebildet ist.

3. Steuerelektronik nach Anspruch 1 oder 2,
**dadurch gekennzeichnet,**
**dass** das Schmelzmittel (12) ein Lot aus einer dem Temperaturschwellwert angepassten Metalllegierung ist.

4. Steuerelektronik nach einem der Ansprüche 1 bis 3,
**dadurch gekennzeichnet,**
**dass** die Unterbrechungsstelle (11) und die dieser zugewandten Leiterenden (9a, 10a) der Leiterabschnitte (9, 10) von einem Gehäuse (14) umgeben sind.

5. Steuerelektronik nach Anspruch 4,
**dadurch gekennzeichnet,**
**dass** das Gehäuse (14) ein Füllmaterial (15) zur Aufnahme geschmolzenen Schmelzmaterials enthält.

6. Steuerelektronik nach einem der Ansprüche 1 bis 5,
**dadurch gekennzeichnet,**
**dass** das Schmelzmittel (12) das Leiterende (9a) und/oder das Leiterende (10a) in Leiterlängsrichtung (L) über einen Leiterabschnitt (a) umschließt, der kürzer ist als die Breite (b) der Unterbrechungsstelle (11).

7. Steuerelektronik nach Anspruch 6,
**dadurch gekennzeichnet,**
**dass** der Leiterabschnitt (a) zehn Prozent (10%) der sich über die beiden Leiterabschnitte (9, 10) inklusive der Unterbrechungsstelle (11) erstreckenden Gesamtlänge (c) beträgt, wobei vorzugsweise c = 30mm und b = 5mm ist.

8. Steuerelektronik nach einem der Ansprüche 1 bis 7,
**dadurch gekennzeichnet,**
**dass** der Durchmesser (d_{S}) des Schmelzmittels (12) dem 2-fachen bis 2,5-fachen, vorzugsweise dem 2,2-fachen, des Durchmessers (d_{L}) des oder jedes Leiterabschnitts (9, 10) beträgt.

## Claims

1. Electronic control system of a cooling fan drive of a motor vehicle, having a circuit board (2) and having a thermal protection element (1) arranged in the region between the circuit board (2) and a connecting lead frame (3), said thermal protection element triggering when the temperature increases above a temperature threshold value,
- wherein one of the connecting ends (9b) of the thermal protection element (1) is connected to the circuit board (2) and the other connecting end (10b) to a connecting lead frame (3) of a wiring set or connecting cable (25) that is overmoulded to produce an isolating wiring or cable connecting housing (8), said wiring set or connection cable leading to the circuit board (2),
- wherein the thermal protection element (1) comprises two conductor sections (9, 10) with conductor ends (9a, 10a) facing each other when forming a breakpoint (11) and the breakpoint (11) is bridged by a melting agent (12), the melting temperature of said melting agent being adapted to the temperature threshold value,
**characterised in that**
- the thermal protection element (1) is substantially mounted on the circuit (2),
- the contact of the circuit board (2) is an insulation displacement contact (5) mounted on the circuit board for displacement contacting the assigned connecting end (9b) of the thermal protection element (1),
- the contact of the connecting lead frame (3) is an insulation displacement contact (4) for displacement contacting the assigned connecting end (10b) of the thermal protection element (1), and
- the circuit board (2) has a section (13) into which the insulation displacement contact (4) of the connecting lead frame (3) is inserted.

2. Electronic control system according to claim 1,
**characterised in that**
the insulation displacement contact (4, 5) is formed as a contact pair of insulation displacement contacts (4a, 4b; 5a, 5b) that are spaced apart from each other and are connected to each other to conduct electricity.

3. Electronic control system according to claim 1 or 2,
**characterised in that**
the melting agent (12) is a solder made of a metal coating adjusted to the temperature threshold value.

4. Electronic control system according to one of claims 1 to 3,
**characterised in that**
the breakpoint (11) and the conductor ends (9a, 10a) of the conductor sections (9, 10) facing the breakpoint are surrounded by a housing (14).

5. Electronic control system according to claim 4,
**characterised in that**
the housing (14) contains a filler material (15) for receiving molten melting material.

6. Electronic control system according to one of claims 1 to 5,
**characterised in that**
the melting agent (12) surrounds the conductor end (9a) and/or the conductor end (10a) in the conductor longitudinal direction (L) via a conductor section (a) which is shorter than the width (b) of the breakpoint (11).

7. Electronic control system according to claim 6,
**characterised in that**
the conductor section (a) amounts to ten percent (10%) of the total length (c) extending across the two conductor sections (9, 10) including the breakpoint (11), wherein preferably c = 30mm and b = 5mm.

8. Electronic control system according to one of claims 1 to 7,
**characterised in that**
the diameter (d_{S}) of the melting agent (12) amounts to 2 times or 2.5 times, preferably to 2.2 times that of the diameter (d_{L}) of the or of every conductor section (9, 10).

## Revendications

1. Electronique de commande d'un entraînement de ventilateur de radiateur de refroidissement d'un véhicule automobile, comprenant une plaque de circuit imprimé (2) et comprenant un élément de protection thermique (1), qui est agencé dans une zone entre la plaque de circuit imprimé (2) et une grille découpée de connexion (3), et qui déclenche lors d'une augmentation de la température au-dessus d'une valeur de seuil de température, ensemble
- dans lequel l'une des extrémités de connexion (9b) de l'élément de protection thermique (1) est reliée à la plaque de circuit imprimé (2), et l'autre extrémité de connexion (10b) est reliée à une grille découpée de connexion (3) d'un jeu de conducteurs ou d'un câble de raccordement (25) menant à la plaque de circuit imprimé (2), la grille étant entourée par moulage pour la réalisation d'un boitier isolant (8) de raccordement de conducteurs ou de câble,
- dans lequel l'élément de protection thermique (1) comporte deux tronçons de conducteur (9, 10) présentant des extrémités de conducteur (9a, 10a) dirigées l'une vers l'autre en formant une zone d'interruption (11), et la zone d'interruption (11) est pontée par un moyen fusible (12) dont la température de fusion est adaptée à ladite valeur de seuil de température,
**caractérisée**
- **en ce que** l'élément de protection thermique (1) est monté sensiblement sur la plaque de circuit imprimé (2),
- **en ce que** la borne de contact de la plaque de circuit imprimé (2) est une borne de contact guillotine (5) montée sur la plaque pour assurer le contact par serrage de l'extrémité de connexion (9b) associée de l'élément de protection thermique (1),
- **en ce que** la borne de contact de la grille découpée de connexion (3) est une borne de contact guillotine (4) pour assurer le contact par serrage de l'extrémité de connexion (10b) associée de l'élément de protection thermique (1), et
- **en ce que** la plaque de circuit imprimé (2) présente une encoche (13) dans laquelle est insérée la borne de contact guillotine (4) de la grille découpée de connexion (3).

2. Electronique de commande selon la revendication 1,
**caractérisée**
**en ce que** la borne de contact guillotine (4, 5) est réalisée sous la forme d'une paire de bornes de contact constituée de bornes de contact guillotine (4a, 4b ; 5a, 5b) mutuellement espacées et reliées de manière électriquement conductrice.

3. Electronique de commande selon la revendication 1 ou la revendication 2,
**caractérisée**
**en ce que** le moyen fusible (12) est une brasure en un alliage métallique adapté à la valeur de seuil de température.

4. Electronique de commande selon l'une des revendications 1 à 3,
**caractérisée**
**en ce que** la zone d'interruption (11) et les extrémités de conducteur (9a, 10a) des tronçons de conducteur (9, 10), dirigées vers ladite zone d'interruption, sont entourées par un boitier (14).

5. Electronique de commande selon la revendication 4,
**caractérisée**
**en ce que** le boitier (14) renferme un matériau de charge (15) destiné à absorber du matériau fusible ayant fondu.

6. Electronique de commande selon l'une des revendications 1 à 5,
**caractérisée**
**en ce que** le moyen fusible (12) entoure l'extrémité de conducteur (9a) et/ou l'extrémité de conducteur (10a), dans la direction longitudinale (L) du conducteur, sur un tronçon de conducteur (a) qui est plus court que la largeur (b) de la zone d'interruption (11).

7. Electronique de commande selon la revendication 6,
**caractérisée**
**en ce que** le tronçon de conducteur (a) vaut dix pourcents (10%) de la longueur totale (c), qui s'étend le long des deux tronçons de conducteur (9, 10) et incluant la zone d'interruption (11), avec de préférence c = 30mm et b = 5 mm.

8. Electronique de commande selon l'une des revendications 1 à 7,
**caractérisée**
**en ce que** le diamètre (d_{S}) du moyen fusible (12) vaut 2 fois à 2,5 fois, de préférence 2,2 fois le diamètre (d_{L}) du ou de chaque tronçon de conducteur (9, 10).
